# EUROPEAN PATENT SPECIFICATION

(11) **EP 1 207 739 B1**
(45) Date of publication and mention of the grant of the patent: **08.09.2004**
(21) Application number: 00938969.3
(22) Date of filing: 29.06.2000
(51) Int. Cl.: A01D 85/00

(54) **A DEVICE FOR STACKING THE BALES IN A MACHINE FOR MAKING BALES OF GRASSY MATERIAL AND THE LIKE**
VORRICHTUNG ZUM STAPELN VON BALLEN FÜR EINE MASCHINE ZUM ERZEUGEN VON HEUBALLEN UND DERGLEICHEN
DISPOSITIF D'EMPILEMENT DE BALLES DANS UNE MACHINE A METTRE EN BALLES DE L' HERBE ET SIMILAIRE

(30) Priority: 01.07.1999 IT FE990006 U
(43) Date of publication of application: 29.05.2002
(73) Proprietor: Cooperativa Lavoratori Agricoli Soc. Coop. A R.L.S. Antonio di Medicina, 40059 Medicina (IT)
(72) Inventor: BIGNAMI, Franco, I-40059 Medicina (IT); STEFANI, Paolo, I-40059 Medicina (IT)
(74) Representative: Lanzoni, Luciano
(86) International application number: PCT/IB2000/000878
(87) International publication number: WO 2001/001755

(56) References cited:
- EP-A- 0 631 715
- DE-A- 3 804 347
- DE-A- 19 600 325
- GB-A- 1 378 176

## Description

### Technical Field

The present invention relates to the field of machinery for making bales of grassy material, such as hay or straw, used as animal fodder.

### Background Art

Conventional machines for making bales of grassy material or the like usually consist of a tractor-drawn trailer supporting a main unit that makes the bales. The grassy material is picked up directly from the ground by appropriate means. The bales are fed out sequentially from the rear end of the baling unit which makes the bales. Extending backwards from the outfeed end of the baling unit, there is an unloading chute on which the finished bales slide down to the ground.

The bales left lying on the ground or harvested field by the baling machine must then be collected up and taken to destination. This operation is carried out by appropriate self-propelled means equipped with a fork designed to pick up the bales scattered round the field one by one and then transport and load each bale onto a suitable collection truck.

This collecting operation may be extremely time consuming and labour intensive.

The document DE-A-3804347 discloses a device for stacking bales comprising a bale raising device being supported on the chute of the bales. A wheel is positioned at the posterior end of the chute to support the chute with the bale raising device.

### Disclosure of the Invention

To overcome this drawback, the present invention provides a device for handling the bales in a machine for making bales of grassy material or the like, to be used preferably in animal forming the machine comprising a baling unit which makes the bales of grassy material and which has an end through which the bales are fed out sequentially, and an unloading chute located at the bale outfeed end of the baling unit and extending backwards from the machine, the bale handling device comprising means for stacking the bales, designed to pick up and lift a bale fed out from the baling unit and to place that bale on the following bale fed out from the baling unit. The invention is further defined by the features of the characterizing portion of claim 1.

Thus, the bales are unloaded from the machine stacked in pairs. This has the notable advantage of speeding up subsequent collection operations. Indeed, the lifting equipment lifts and transports to the waiting collection truck not one but two bales at a time. That means considerable savings on collection times and significantly enhances productivity for operations of this kind.

Moreover, bales stacked by a device made according to the present invention are also more protected against atmospheric agents, and in particular, bad weather, than are bales made by conventional balers and dropped on the field one by one.

The present invention also relates to a baling machine equipped with a stacking device as disclosed herein.

### Brief Description of the Drawings

Further advantages of the present invention will become more apparent from the detailed description which follows, made with reference to the accompanying drawings, which illustrate a preferred embodiment of the invention and in which:
- Figure 1 is a schematic side view of a tractor-drawn baling machine equipped with the bale stacking device made according to a preferred embodiment of the present invention;
- Figure 2 is a scaled-up view of the bale stacking device made according to the preferred embodiment of the present invention, applied to the baling machine;
- Figure 3 is a perspective view of the bale stacking device in a first working stage, where the first bale to be stacked is being fed out;
- Figure 4 is a perspective view of the bale stacking device in a second working stage, where the first bale to be stacked is being held in the raised position while the second bale, on which the raised bale is to be placed, is being fed out;
- Figure 5 is a perspective view of the bale stacking device in a third working stage, where the raised bale is being placed on top of the bale below, just before both bales are unloaded from the baling machine;
- Figure 6 is a perspective view of the pair of stacked bales unloaded onto the ground by the machine, in accordance with the preferred embodiment of the invention;
- Figure 7 is a diagram illustrating a preferred embodiment of the pneumatic system of the stacking device made according to the present invention.

### Description of a Preferred Embodiment of the Invention

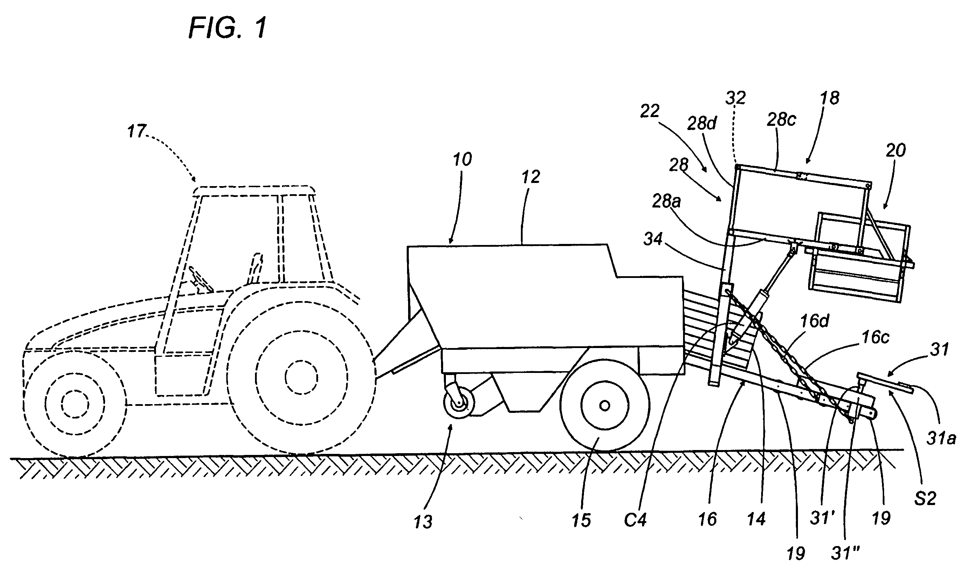

As shown in Figure 1, a baling machine 10 for making bales of grassy material or the like, such as hay used as animal fodder, basically comprises a baling unit 12 for making the bales of grassy material, having an end or aperture 14 from which the bales are fed out sequentially one at a time, and a bale unloading chute 16 which is mounted at the outfeed end 14 of the baling unit 12 and extends outwards from the back of the machine 10.

The baling unit is supported by a trailer 13, mounted on wheels, only one of which - labelled 15 - is illustrated in Figure 1. The trailer is drawn by a suitable tractor 17.

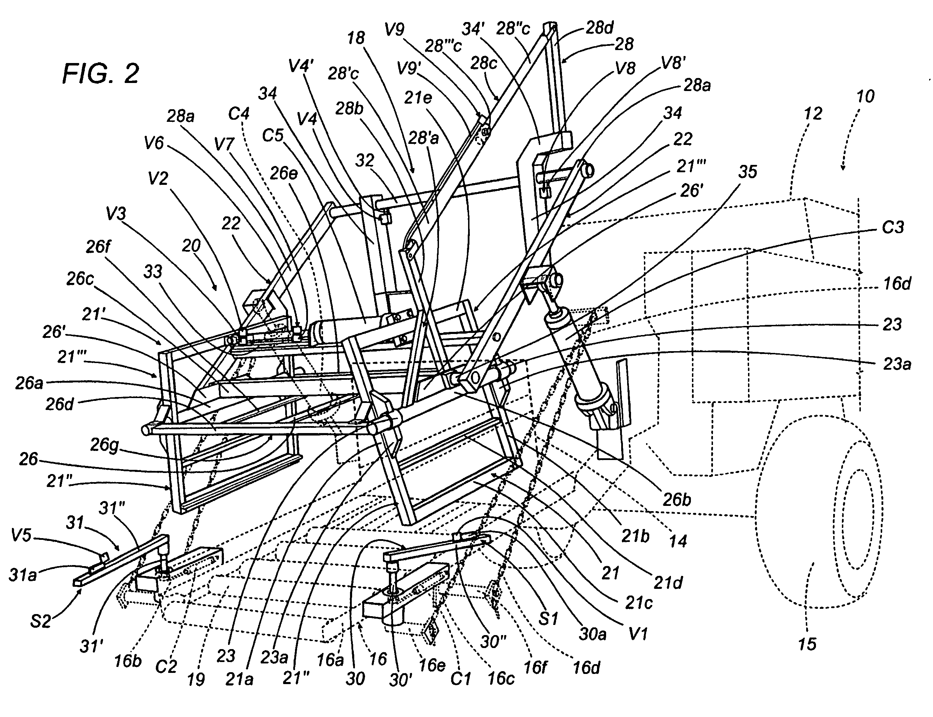

As shown with reference also to Figure 2, the chute 16 is of conventional design consisting of a plurality of parallel rollers 19 mounted transversally, in such a way that they can turn freely, across a pair of longitudinal side bars 16a, 16b extending from the machine frame and connected, preferably hinged, to the machine frame at the lower edge of the bale outfeed aperture of the baling unit. Two chains 16c, 16d on each side of the chute 16 extend from a corresponding point at the top of the machine frame and support the related longitudinal bars 16a, 16b by means of horizontal arms 16e, 16f attached to the longitudinal bars at points along the longitudinal bars themselves.

The machine also has a pick-up ramp designed to pick up the grassy material from the ground. The ramp is not illustrated in the accompanying drawings since it may be of a type very well known to experts in the trade. As the machine moves forward, the ramp picks up the grassy material from the ground and feeds it to the baling unit which compresses it to form compact, substantially rectangular box-shaped bales. The bales may also have other shapes without departing from the scope of the invention.

Advantageously, the present embodiment of the machine comprises a bale stacking device equipped with means 18 for picking up and lifting a bale 11' as it feeds out of the baling unit and for placing the raised bale 11' on top of a bale 11'' fed out of the baling unit 12 after it.

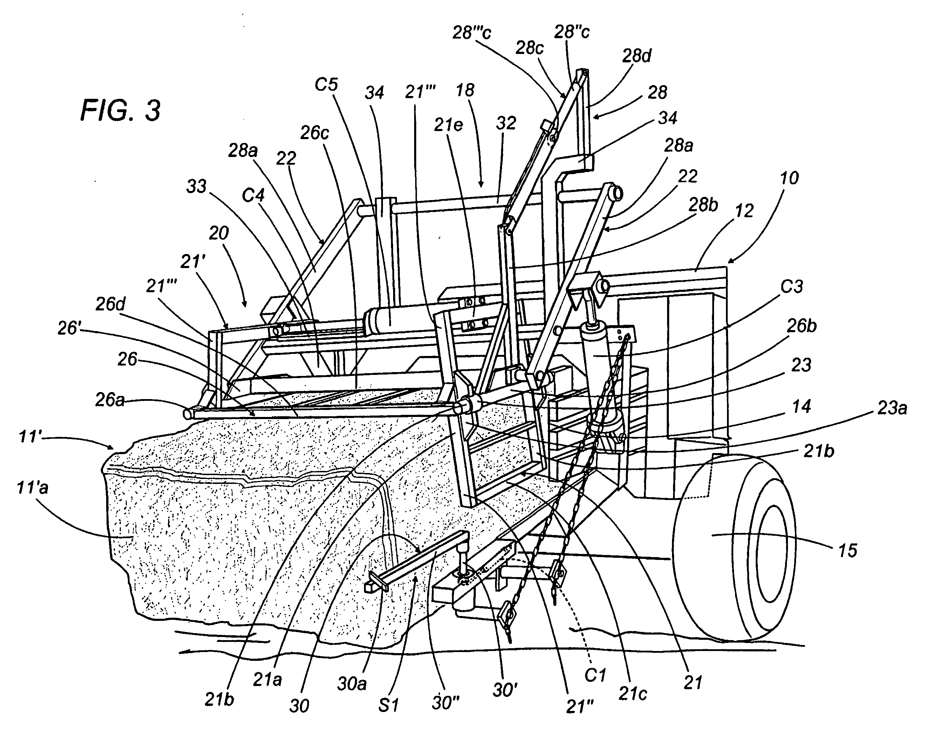

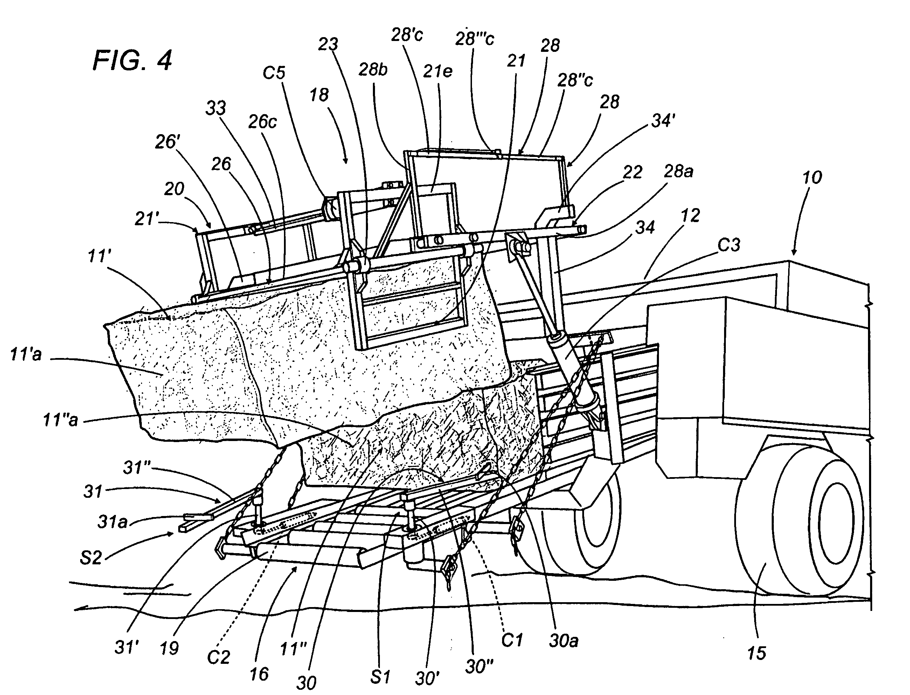

As shown also in Figures 3 to 6, the stacking means 18 comprise a gripper element, labelled 20 as a whole, which is located above the unloading chute 16 and which constitutes means for gripping the bale 11' when the whole of the latter is properly positioned on the chute 16, and for lifting the bale 11' from a lower pick-up position (shown in Figure 3) and a raised position (shown in Figure 4) from where it can be placed on top of the following bale 11'' fed out onto the chute 16.

When the raised bale 11' is in the raised position, its underside is at a level just above the height of the following bale 11'' so that when it is released, it falls onto the other bale gently without causing the bales to break up.

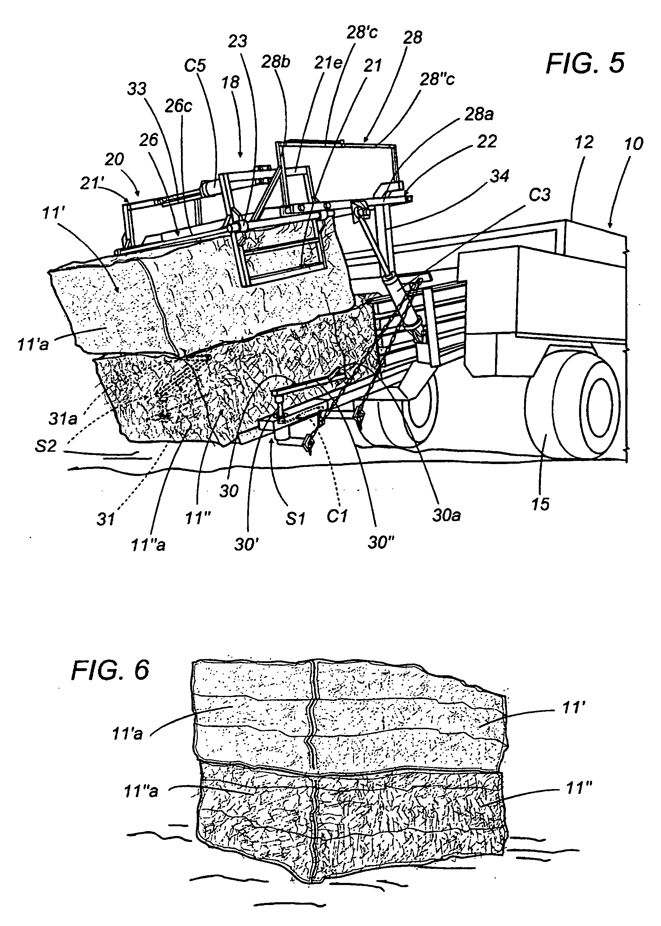

Once the following bale 11'' has been positioned under the raised bale 11', as illustrated in Figure 5, the gripping means 20 are activated in such a way as to let the raised bale 11' fall onto the following bale 11''.

When the stacked bales 11', 11'' have both been unloaded onto the chute 16 (see Figure 6), the bale gripping means 20 are moved back to the lower position illustrated in Figure 3 from where they can pick up and lift another bale. As shown in particular in Figure 2, the bale gripping means 20 comprise a first and a second jaw 21, 21', transversely spaced from one another, designed to grip the sides of the bale 11', and means C5 for operating the first and second jaws 21, 21' between a closed position in which they hold the sides of the bale 11' and an open position in which the sides of the bale 11' are released.

As illustrated in particular by figure 2, the bale 11' gripping means 20 include a mounting frame 26 for the jaws 21, 21', which are connected to and freely rotate around the mounting frame 26. The jaws 21, 21' each have a lower portion 21'', 21", located below the fulcrum axis of the jaws on the mounting frame 26, which can grip and pick up the bale 11', and an upper portion 21''',21''', above the fulcrum axis. The gripper means 20 drive means C5 are located and connected between the upper portions 21''',21''' of the two jaws 21, 21'.

The frame 26 includes a first and a second side longitudinal bar 26a, 26b in the form of circular cross-section bars on which the jaws 21, 21' are hinged. The longitudinal bars 26a, 26b are connected to each other by a main crossbar 26c, which connects the corresponding intermediate points of the longitudinal bars 26a, 26b to each other and by a first and a second secondary crossbar 26d, 26e which connect the corresponding ends of the longitudinal bars 26a, 26b. 26f and 26d indicate, in figure 2, longitudinal guide bars for the upper surface of the bale 11' coming from the baling unit 12. As illustrated, the bars 26f and 26d are connected to corresponding intermediate points of the crossbars 26c, 26d, 26e.

As well illustrated in figure 2, each of the jaws 21, 21' includes a first and a second upright 21a, 21b, which are spaced apart lengthways and which are connected to, using a perpendicular gusset plate 23a, a bush 23 for inserting in the respective shaft 26a, 26b of the mounting frame. The bushes 23 allow the jaw 20 to rotate freely on the relative shaft 26a, 26b.

Each of the jaws also includes a lower longitudinal bar 21c and an intermediate longitudinal bar 21d, which define the lower bale pick-up portion 21'', and an upper longitudinal bar 21e which defines a securing element for the drive means C5.

As illustrated, the drive means C5 take the form of a double-acting pneumatic cylinder connected to an upper longitudinal bar of a jaw 21 and their mobile rod is connected to a counter-opposing upper longitudinal bar of the other jaw 21'.

The number 22 indicates, in figure 2, the means used to move the bale gripper means 20. The means 22 include mobile means 28 for supporting the bale 11' gripper means 20, in particular the frame 26 which holds the jaws 21, 21', which have the form of four-bar linkage means for maintaining the angular orientation of the bale 11' gripper means 20 and the drive means C3, C4 for raising and lowering the support means 28, respectively.

In the example illustrated, the four-bar linkage support means 28 lift the bale 11' and rotate it around a fulcrum point, that is, move it backwards.

The support means 28 include, for each side of the frame 26, a respective longitudinal arm 28a which has a rear end which is connected, in free rotation, to a respective plate 26', 26', connected at the top to a corresponding intermediate longitudinal bar 26a, 26b of the gripper mounting frame 26. Each longitudinal arm 28a also has a front end which is connected to the respective side end of a crossways rod 32 which rotates freely around the machine frame.

The four-bar linkage for maintaining the orientation or angle of the bale being lifted is made on only one side of the lifting device and is defined by the arm 28a, which defines a lower crank lever, as well as an upper crank lever 28c which is connected at the rear, with a corresponding freely-rotating hinge, to the upper end of a respective rear connecting rod arm 28b which, in turn, is rigidly connected to the bale 11' gripper means mounting frame 26.

The upper crank lever 28c is also connected at the front, with a corresponding freely-rotating hinge, to the upper end of a respective front arm 28d secured to the machine frame.

As illustrated in particular by figure 2, the connecting rod 28c is connected to the round bar 26b of the frame 26 using a corresponding angle bar 28'a.

The number 35 indicates, in figure 2, a pin which permits a freely-rotating hinging between the connecting rod 28b and the lower crank lever 28a.

As illustrated in figure 2, the crossways cylindrical bar 32 is connected to the machine frame using support bars 34, 34, around which it freely rotates, extending towards the top of the frame which surrounds the machine baling unit 12. The arm 28d, to which the upper crank lever 28c is hinged, is secured to the top side of a horizontal extension 34' of a corresponding support bar 34.

As illustrated in figure 2, the drive means of the bale 11' gripper means 20 support means 28 include, for each side of the support means, a respective single-acting pneumatic lift cylinder C3, C4 which has an extended stroke which is sufficient to support the raised position of the bale 11' gripper means 20.

Means, which are not illustrated, are used to gradually release the drive fluid from the pneumatic lift cylinders C3, C4 to permit a slow downstroke of the cylinders until there is a substantial release of the drive fluid by the cylinders at the lowered position for the pick-up of another bale.

By way of example, the bale produced can have a height of 70 cm, a width of 120 cm and a pre-established length between 140 and 210 cm. The maximum extended stroke of the cylinders C3, C4 is sufficient to lift the bale to a height of 2 or 3 cm above the following bale being released.

As illustrated in figure 2, each single-acting cylinder C3, C4 is connected between the machine frame and the lower arms 28a of the gripper 20 support means 28.

First sensor means S1 are used to detect the reaching of a pre-defined release position for the bale to be lifted 11'. In addition, second sensor means S2 are used to detect the reaching of a pre-defined release position for the following bale 11''. The pre-defined release position for the following bale 11", signalled by the second sensor means S2, is further back than the pre-defined release position for the bale to be lifted 11'. This is to allow for the fact that, following the rotation of the lifting mechanism, the raised bale 11' is, due to the effect of the lifting, also moved backwards. The pre-defined position for signalling the arrival of the following bale 11'' is detected at a point which makes it possible to lay the raised bale 11' on the second bale 11" so that the bales are aligned vertically.

The first and second sensor means S1, S2 have a respective contact portion 30a, 31a with the front side 11'a, 11"a of the respective bale 11', 11", whose contact portion is suitable for positioning along the unloading path of the respective bale 11', 11'' in a position above the chute 16.

For this purpose, the contact portions 30a, 31a of the sensor means S1, S2 are supported by a respective support element 30, 31 which is rotatably mounted on the chute 16.

Means C1, C2 are used to rotate the respective support elements 30, 31 for the contact portion 30a, 31a and to move it, respectively, outside or along the unloading path of the respective bale 11', 11''.

Each support element 30, 31 for the respective sensor S1, S2 includes a stem 30', 31', substantially perpendicular to the support plane for the bale defined by the chute 16, from which a respective crossbar 30", 31'' extends, substantially parallel to the support surface for the bale, which contains the contact portions 30a, 31a.

The rotation of the perpendicular stem 30', 31' moves the crossbars 30", 31'' outside the path of the bales so that they do not interfere with the bales, also when the movement of the machine 10 in curved sections causes the bales to move slightly in a crossways direction in relation to the chute 16.

The means C1, C2 for rotating the respective elements 30, 31 which support the contact portion 30a, 31a and move it, respectively, outside and along the unloading path of the respective bale 11', 11" have the form of a pneumatic cylinder housed, substantially parallel to a corresponding side longitudinal bar 16a, 16b of the chute 16, in a casing 30a, 31a connected to the corresponding side longitudinal bar 16a, 16b and which has, on its extendable shaft, a rack which works with a gear connected to the upper end of the stem 30', 31' of the corresponding sensor S1, S2.

As illustrated, the mechanical pneumatic valves V1 of the first sensor and V5 of the second sensor are supported on the respective crossbars 30" and 31".

Other movement means for the contact portions of S1 and S2 may be used. For example, a pneumatic cylinder could be used for each sensor to tip the respective sensor arm from a vertical position for detecting the position to a substantially horizontal or lowered standby position.

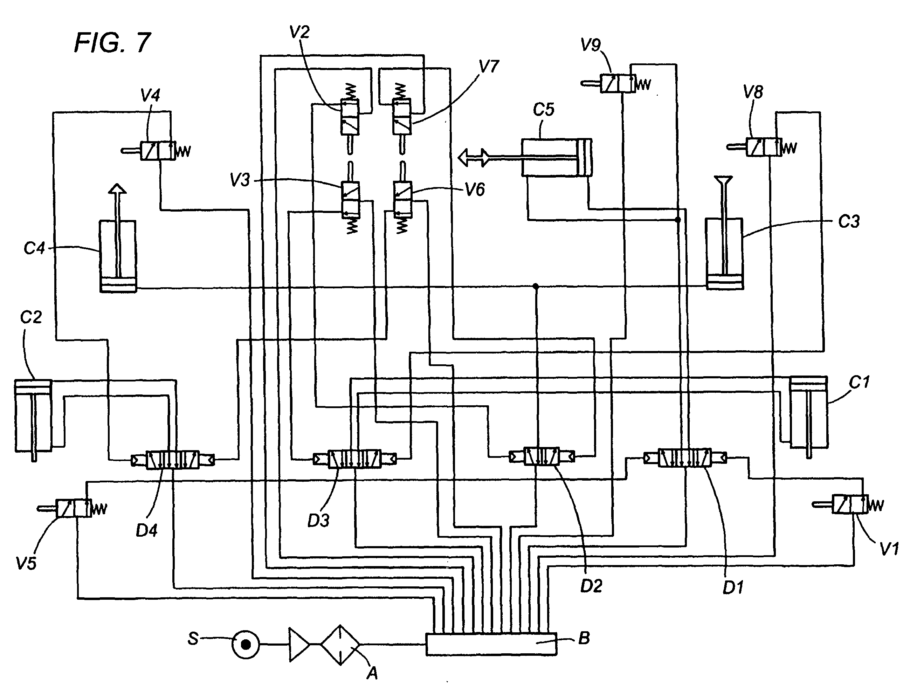

Third sensor means, indicated in figures 2 and 7 with the reference V2, are used to control the lifting of the bale by the lifting means. The third sensor means V2 are activated by the bale path, in particular, in this example, by the arrival in the fully extended position of the cylinder rod C5, by the gripper means.

Fourth sensor means, indicated in figures 2 and 7 with the reference V3, are used to move the first sensor means S1 out of the trajectory of the bale 11' being baled. The fourth sensor means V3 are activated by the bale path, in particular, in this example, by the arrival in the fully extended position of the cylinder rod C5, by the bale 11' gripper means.

Fifth sensor means, indicated in figures 2 and 7 with the reference V4, are used to control the positioning of the second sensor means S2 along the trajectory of the bale 11'' being baled. The fifth sensor means V4 are activated by the upstroke, in particular, in this example, by the arrival in the fully extended position of the cylinder rod C4, by the bale 11' gripper means. The fifth sensor means V4 are connected to one of the uprights 34 and are activated by a tab V4' which is connected to the rotating bar 32.

Sixth sensor means, indicated in figures 2 and 7 with the reference V6, are used to move the second sensor means S2 out of the trajectory of the bale 11" being baled. The sixth sensor means V6 are activated by the bale unloading stroke, in particular, in this example, by the arrival in the fully retracted position of the cylinder rod C5 which actuates the gripper means, by the bale 11' gripper means.

Seventh sensor means, indicated in figures 2 and 7 with the reference V7, are used to control the down stroke of the bale 11' gripper means. The seventh sensor means V7 are activated by the unloading stroke of the bale 11', in particular, in this example, by the arrival in the fully retracted position of the cylinder rod C5 which actuates the gripper means, by the bale 11' gripper means.

Eighth sensor means, indicated in figures 2 and 7 with the reference V8, are used to control the positioning of the first sensor means S1 along the trajectory of the bale 11' being baled. The eighth sensor means V8 are activated by the down stroke of the bale 11' gripper means, in particular, in this example, by the arrival in the fully retracted position of the cylinder rod C3 which lifts the gripper means.

As illustrated in figure 2, the pneumatic valves or sensor means V2, V3, V6, V7, which are driven by the mobile rod of the cylinder C5, are supported on a bar 33 which protrudes over and is parallel to the rod of the body of the cylinder C5.

When the rods of the lifter cylinders C3, C4 reach the retracted position, the two stacked bales 11', 11'' have already been unloaded by the chute 16. The eighth sensor means V8 are connected to one of the uprights 34 and are activated by a tab V8' which is connected to the rotating bar 32.

Safety sensor means, indicated in figures 2 and 7 with the reference V9, are also used to signal the condition of excessive stress for the bale gripper means. In practice, the safety sensor V9 signals the condition in which the bale 11" being baled and moved forward with the lower edge of the bale 11' raised and the consequent rotation of the raised bale 11'. When the signal is issued by the sensor means V9, bale 11' gripper opening is activated, the bale is released and the gripper gradually returns to the lowered position in front of the baling unit bale outfeed.

With reference to figure 3, it can be seen how the upper crank lever 28c consists of a first portion 28'c and a second portion 28"c which is telescopically inserted inside the first portion and secured to it using a pin 28'''c inserted in respective holes at the reciprocal coupling ends of the first portion 28'c and the second portion 28''c. The first portion 28'c of the upper crank lever 28c has a rod or pusher element V9' which can act on and enable the pneumatic sensor V9 which is connected to the second portion 28"c of the upper crank lever 28c. Under normal operating conditions, the upper crank lever 28c operates as if it consisted of a single rod defining the upper crank lever element of the four-bar lever unit which is used to maintain the orientation of the raised bale. When, due to the effect of a bale 11' rotation, the bolt or pin 28'''c, suitably dimensioned, breaks, the second portion 28"c enters the first portion 28'c and the rod V9' actuates the safety sensor V9.

A preferred embodiment of the pneumatic circuit for the stacking unit is illustrated in figure 7.

The circuit envisages that, starting from a compressed air source S, through an air filter A, the air, with a pre-set operating pressure, enters a 13-way manifold, indicated in figure 7 with B.

In a preferred embodiment, the source S consists of the tank which also feeds the machine compressed air braking circuit, which is, in turn, fed by the compressor of a tractor towing the machine.

The compressed air supplied to the circuit of the device through a special T-shaped junction not illustrated in the enclosed figures. If required, it may also be possible to use, as a source of compressed air S, an additional tank for the compressed air or, if there is no compressed air braking circuit, to use a special tank for the compressed air and a special compressor connected directly to the baler.

From the manifold B, the compressed air is distributed, through the distributor D3, to the double-acting pneumatic cylinder, indicated with the reference C1, which moves the first sensor for detecting the arrival in the pre-set position of the bale to be lifted 11' to position it, respectively, along or outside the path of the bale and, through the distributor D4, to the double-acting pneumatic cylinder, indicated with the reference C2, which moves the second sensor for detecting the arrival in the pre-set position of the following bale to be lifted 11'' to position it, respectively, along or outside the path of the bale.

From the manifold B, the compressed air is also distributed, through the distributor D2, to the single-acting pneumatic cylinders, indicated with the references C3 and C4, which lift the bale gripper means and, through the distributor D1, to the double-acting pneumatic cylinder, indicated with the reference C5, which opens and closes the bale gripper.

The reference D1 indicates a pneumatic control distribution valve 5/3 which controls the cylinder C5 which opens and closes the bale gripper while the reference D2 indicates a pneumatic control distribution valve 5/2 which controls the cylinders C3 and C4 which lift the bale gripper means.

The reference D3 indicates a pneumatic control distribution valve 5/3 which controls the cylinder C1 which moves the first sensor for detecting the arrival in the pre-set position of the bale to be lifted 11' while the reference D4 indicates a pneumatic control distribution valve 5/3 which controls the cylinder C2 which moves the second sensor for detecting the arrival in the pre-set position of the following bale 11".

The reference V1 indicates, in figure 7, a mechanical pneumatic valve which defines the first sensor triggered by the bale to be lifted 11' which controls the control distribution valve D1.

V2 is a mechanical pneumatic valve which defines the third sensor which is triggered by the double-acting cylinder C5 which controls opening and closing of the gripper which controls the control distribution valve D2.

V3 is a mechanical pneumatic valve which defines the fourth sensor which is triggered by the double-acting cylinder C5 which controls opening and closing of the gripper which controls the control distribution valve D3.

V4 is a mechanical pneumatic valve which defines the fifth sensor which is triggered by the cylinder C4 which controls lifting of the bale gripper means which controls the control distribution valve D4.

V5 is a mechanical pneumatic valve which defines the second sensor which is triggered by the following bale 11'' which also controls the control distribution valve D1.

V6 is a mechanical pneumatic valve which defines the sixth sensor which is triggered by the double-acting cylinder C5 which controls opening and closing of the gripper which also controls the control distribution valve D4.

V7 is a mechanical pneumatic valve which defines the seventh sensor which is triggered by the double-acting cylinder C5 which controls opening and closing of the gripper which also controls the control distribution valve D2.

V8 is a mechanical pneumatic valve which defines the eighth sensor which is triggered by the double-acting cylinder C3 which controls lifting of the bale gripper means which also controls the control distribution valve D3.

V9 is a mechanical pneumatic valve which defines the emergency sensor for the safety opening of the bale gripper means which is connected to the cylinders C3, C4 and C5.

The functioning of the present device is as follows.

The first stage begins with the bale 11' gradually being baled and coming out of the baling unit, passing beneath the gripper which is in the lowered and open position (as illustrated in figure 3). In this stage, the first sensor S1 is along the unloading path of the bale 11' while the second sensor S2 is outside the bale path.

When the bale 11', which is ready to be unloaded, triggers the first sensor S1, that is, touches the sensor contact portion, the valve V1 is triggered which, over the distribution valve D1, actuates the cylinder C5 to close the gripper on the bale 11'.

The rod coming out of the cylinder C5 triggers the valve V3 which, over the distribution valve D3, actuates the cylinder C1 which releases the first sensor from the bale unloading path.

In addition, the rod coming out of the cylinder C5 triggers the valve V2 which, over the valve D2, actuates the cylinders C3, C4 which lift the gripper which is holding the bale.

Once the rod of the lift cylinders C3, C4 has come out, the valve V4 is triggered which controls, over the valve D4, the positioning of the second sensor along the path of the following bale 11", which is being baled and leaving the baling unit passing beneath the raised bale 11'.

When the following bale 11" reaches the pre-set outfeed position, it comes into contact with the second sensor which triggers the valve V5 which, over the distribution valve D1, actuates the cylinder C5 which then opens and drops the raised bale 11' on the following bale 11'' beneath it.

In the next stage the rod retracting into the cylinder C5 triggers the valve V6 which, over the valve D4, actuates the cylinder C2 which moves the second sensor outside the bale unloading path. Similarly, the rod retracting into the cylinder C5 triggers the valve V7 which, over the valve D2, actuates the discharging of the pressure of the cylinders C3 and C4 so that they move the bale grippers slowly down towards the initial low starting position.

Meanwhile, the following bale 11'' continues to move along the chute 16 bringing the bale 11' with it. The two bales on top of each other are then unloaded by the machine onto the ground as illustrated in figure 6.

Once the rod of the lift cylinders C3, C4 has returned, that is, moved back to the retracted or closed position, the valve V8 is triggered which actuates, over the valve D3, the cylinder C1 of the first sensor to move the first sensor to the unloading path for the bale 11'. At this point, the cycle can start again for another pair of bales.

As can be inferred from the accompanying drawings, the invention described can be subject to modifications and variations without thereby departing from the scope of the inventive concept. Moreover, all the details of the invention may be substituted by technically equivalent elements.

## Claims

1. A device for handling the bales in a machine (10) for making bales (11' 11'') of grassy material or the like, to be used preferably in animal farming; the machine comprising a baling unit (12) which makes the bales (11', 11'') of grassy material and which has an end (14) through which the bales (11', 11'') are fed out sequentially, and an unloading chute (16) located at the bale (11', 11'') outfeed end (14) of the baling unit (12) and extending backwards from the machine (10); the bale handling device comprising means (18) for stacking the bales, designed to pick up and raise a bale (11') fed out from the baling unit and to place that bale (11') on the following bale (11'') fed out from the baling unit; the bale handling device being **characterized in that** said means (18) for stacking the bales are connected to the machine frame by support means (28) having support bars (34, 34) located at the outfeed end (14) of the baling unit (12).

2. The device according to claim 1, **characterized in that** the stacking means (18) comprise means (20), located above the unloading chute, designed to grip the bale (11') when the whole of the latter is properly positioned on the chute (16), and means (22) for driving the bale gripping means (20) so that they move between a lower gripping position and a raised position which, once the following bale (11'') has been placed under the raised bale (11') and the gripping means (20) operated in such a way as to release the raised bale (11'), enables the raised bale (11') to be placed on top of the following bale (11'').

3. The device according to claim 2, **characterized in that**, when the raised bale (11') is in the raised position, its underside is at a level just above the height of the following bale (11'').

4. The device according to claim 2 or 3, **characterized in that**, after the stacked bales (11', 11'') have been unloaded by the chute (16), the drive means (22) move the bale gripping means (20) back to the lower, gripping position.

5. The device according to any of the foregoing claims from 2 to 4, **characterized in that** the bale gripping means (20) comprise at least one first and one second jaw (21, 21'), transversely spaced from one another, designed to grip the sides of the bale (11'), and means (C5) for operating the first and second jaws (21, 21') between a closed position in which they hold the sides of the bale (11') when the bale (11') is in the lower, pick-up position, and an open position in which the sides of the bale (11') are released when the bale (11') is in the raised position to be placed on top of the following bale (11'').

6. The device according to claim 5, **characterised in that** the bale (11') gripping means (20) comprise a mounting frame (26) for the jaws (21, 21') which are pivotally mounted on the frame (26); said jaws (21, 21') each having a portion (21'', 21''), below the pivot axis on the mounting frame (26), designed to engage and hold the sides of the bale (11'), and a portion (21''', 21'''), above the pivot axis, connected to and acted on by the means (C5) that actuate the gripping means (20).

7. The device according to any of the foregoing claims from 2 to 6, **characterised in that** the means (22) for driving the bale gripping means (20) comprise means (28) for supporting the bale (11') gripping means (20) and means (C3, C4) for actuating the means (28) that support the bale (11') gripping means (20).

8. The device according to claim 7, **characterised in that** the supporting means (28) are designed to maintain the angular position of the bale (11') gripping means (20) in such a way as to move the raised bale (11') backwards.

9. The device according to claim 7 or 8, **characterised in that** the means that actuate the means (28) for supporting the bale (11') gripping means (20) comprise at least one single action pneumatic lift cylinder (C3, C4) whose outward stroke coincides with the lift position of the bale (11') gripping means (20), and also **characterised in that** means are envisaged to release the drive fluid from the pneumatic lift cylinder (C3, C4) gradually in such a way as to allow the cylinder to move down slowly until all the drive fluid has been discharged when the lower position in which another bale can be picked up.

10. The device according to any of the foregoing claims, **characterised in that** first sensor means (S1) are envisaged to detect the bale (11') to be lifted when it reaches a defined position during unloading so as to trigger the gripping stage and thus enable the bale (11') to be raised.

11. The device according to any of the foregoing claims, **characterised in that** second sensor means (S2) are envisaged to detect the following bale (11'') when it reaches a defined position during unloading so as to trigger the stage of releasing the raised bale (11') to place it on top of the following bale (11''), and also **characterised in that** the defined position of the following bale (11'') is behind the defined position of the bale (11') to be raised so that after the bale (11') has been rotated upwards it is vertically aligned with the following bale (11'').

12. The device according to claim 10 or 11, **characterised in that** at least one of the first and second sensor means (S1, S2) has a contact portion (30a, 31a) that touches the front face 11'a, 11''a) of the corresponding bale (11', 11''), said contact portion extending over the unloading chute (16) along the outfeed path of the corresponding bale (11', 11''); means (C1, 30, C2, 31) being provided to bring the contact portion (30a, 31a) of the sensor means (S1, S2) outside the outfeed path of the corresponding bale (11', 11").

13. The device according to any of the foregoing claims from 10 to 12, **characterised in that** at least one of the first and second sensor means (S1, S2) is mounted on the unloading chute (16).

14. The device according to claim 12 or 13, **characterised in that** the means that bring the contact portion (30a, 31a) of the sensor means (S1, S2) outside the outfeed path of the corresponding bale (11', 11'') comprise an arm (30, 31) supporting the contact portion (30a, 31a) and rotatably mounted on the chute (16), and drive means (C1, C2) for rotating the supporting arm (30, 31) of the contact portion (30a, 31a), and also **characterised in that** the supporting arm (30, 31) comprises a stem (30', 31') that is substantially perpendicular to the surface of the chute (16) on which the bales slide, from which there extends a crossbar (30", 31'') that is substantially parallel to the surface of the chute (16) on which the bales slide; the perpendicular stem (30', 31') being rotated in a plane that is also substantially parallel to the chute surface, in such a way as to avoid interference with the bales (11', 11'') being unloaded, even when the machine (10) is negotiating a curve.

15. The device according to any of the foregoing claims, **characterised in that** third sensor means (V2) are envisaged to control the lifting of the bale by the lift means, the third sensor means (V2) being triggered by the bale gripping means when they close to come into contact with the sides of the bale.

16. The device according to any of the foregoing claims from 10 to 15, **characterised in that** fourth sensor means (V3) are envisaged to move the first sensor means (S1) outside the path of the bale (11') being made, the fourth sensor means (V3) being triggered by the bale gripping means when they close to come into contact with the sides of the bale.

17. The device according to any of the foregoing claims from 11 to 16, **characterised in that** fifth sensor means (V4) are envisaged to control the positioning of the second sensor means (52) on the path of the bale (11'') being made, the fifth sensor means (V4) being triggered by the bale gripping means when they lift the bale (11').

18. The device according to any of the foregoing claims from 11 to 17, **characterised in that** sixth sensor means (V6) are envisaged to move the second sensor means (S2) outside the path of the bale (11'') being made, the sixth sensor means (V6) being triggered by the bale (11') gripping means when they open to release the bale (11').

19. The device according to any of the foregoing claims, **characterised in that** seventh sensor means (V7) are envisaged to control the lowering of the bale (11') gripping means, by the lift means, the seventh sensor means (V7) being triggered by the bale (11') gripping means when they open to release the bale (11').

20. The device according to any of the foregoing claims from 10 to 19, **characterised in that** eighth sensor means (V8) are envisaged to control the positioning of the first sensor means (S1) on the path of the bale (11') being made, the eighth sensor means (V8) being triggered by the bale (11') gripping means when they move down.

21. The device according to any of the foregoing claims, **characterised in that** safety sensor means (V9) are envisaged to indicate conditions of abnormal stress of the bale gripping means.

22. A machine (10) for making bales (11', 11'') of grassy material or the like, **characterised in that** it comprises a bale stacking device made according to any of the foregoing claims.

## Patentansprüche

1. Vorrichtung zur Handhabung von Ballen in einer Maschine (10) zum Bilden von Heuballen (11', 11") und dergleichen, zu verwenden vorwiegend in der Massentierhaltung; wobei die Maschine eine Ballenformeinheit (12) enthält, welche die Heuballen (11', 11") formt, und welche ein Ende (14) aufweist, durch welches die Ballen (11', 11") aufeinanderfolgend entladen werden, und eine Entladerutsche (16) für die Ballen (11', 11"), angeordnet an dem Austrittsende (14) der Ballenformeinheit (12) und sich von der Maschine (10) aus nach hinten erstreckend; wobei die Vorrichtung zur Handhabung Mittel (18) zum Stapeln der Ballen enthält, dazu bestimmt, einen aus der Ballenformeinheit austretenden Ballen (11') aufzunehmen und hochzuheben und diesen Ballen (11') auf dem nachfolgenden Ballen (11"), der aus der Ballenformeinheit ausgetreten ist, anzuordnen; wobei die Vorrichtung zur Handhabung der Ballen **dadurch gekennzeichnet ist, dass** die genannten Mittel (18) zum Stapeln der Ballen an den Maschinenrahmen mit Hilfe von Trägermitteln (28) angeschlossen sind, welche Trägerstangen (34, 34) aufweisen, die sich am Austrittsende (14) der Ballenformeinheit (12) angeordnet befinden.

2. Vorrichtung nach Patentanspruch 1, **dadurch gekennzeichnet, dass** die Stapelmittel (18) Mittel (20) enthalten, die oberhalb der Entladerutsche angeordnet und dazu bestimmt sind, den Ballen (11') zu greifen, wenn letzterer vollkommen und geeignet auf der Rutsche (16) positioniert ist, sowie Mittel (22) zum Betätigen der Greifmittel (20) für die Ballen, so dass diese zwischen einer unteren Greifposition und einer angehobenen Position bewegt werden, welche, sobald der nachfolgende Ballen (11'') unter dem angehobenen Ballen (11') platziert ist und die Greifmittel (20) auf solche Weise betätigt werden, dass sie den angehobenen Ballen (11') freigeben, den angehobenen Ballen (11') in die Lage versetzen, oben auf dem nachfolgenden Ballen (11'') platziert zu werden.

3. Vorrichtung nach Patentanspruch 2, **dadurch gekennzeichnet, dass**, wenn sich der angehobene Ballen (11') in der angehobenen Position befindet, seine Unterseite auf einer Ebene gerade oberhalb der Höhe des nachfolgenden Ballens (11") liegt.

4. Vorrichtung nach Patentanspruch 2 oder 3, **dadurch gekennzeichnet, dass**, nachdem die gestapelten Ballen (11', 11") durch die Rutsche (16) entladen worden sind, die Antriebsmittel (22) die Greifmittel (20) des Ballens zurück in die gesenkte Greifposition bewegen.

5. Vorrichtung nach einem beliebigen der vorstehenden Patentansprüche von 2 bis 4, **dadurch gekennzeichnet, dass** die Greifmittel (20) des Ballens wenigstens eine erste und eine zweite Klemmbacke (21, 21') enthalten, in Querrichtung voneinander abstehend und dazu bestimmt, die Seiten des Ballens (11') zu greifen, sowie Mittel (C5) zum Betätigen der ersten und zweiten Klemmbacken (21, 21') zwischen einer geschlossenen Position, in welcher sie die Seiten des Ballens (11') halten, wenn der Ballen (11') sich in der unteren Aufnahmeposition befindet, und einer offenen Position, in welcher die Seiten des Ballens (11') freigegeben werden, wenn sich der Ballen (11') in der angehobenen Position befindet, um oben auf dem nachfolgenden Ballen (11") platziert zu werden.

6. Vorrichtung nach Patentanspruch 5, **dadurch gekennzeichnet, dass** die Greifmittel (20) des Ballens (11') einen Trägerrahmen (26) für die Klemmbacken (21, 21') enthalten, welche drehbar an dem Rahmen (26) montiert sind; wobei die genannten Klemmbacken (21, 21') unterhalb der Drehachse an dem Trägerrahmen (26) jede einen Abschnitt (21'', 21") aufweisen, dazu bestimmt, die Seiten des Ballens (11') zu greifen und zu halten, sowie einen Abschnitt (21''', 21''') oberhalb der Drehachse, angeschlossen an und betätigt durch die Mittel (C5), welche die Greifmittel (20) betätigen.

7. Vorrichtung nach einem beliebigen der vorstehenden Patentansprüche von 2 bis 6, **dadurch gekennzeichnet, dass** die Mittel (22) zum Betätigen der Greifmittel (20) des Ballens Mittel (28) zum Tragen der Greifmittel (20) des Ballens (11') und Mittel (C3, C4) zum Aktivieren der Mittel (28) haben, welche die Greifmittel (20) des Ballens (11') tragen.

8. Vorrichtung nach Patentanspruch 7, **dadurch gekennzeichnet, dass** die Trägermittel (28) dazu bestimmt sind, die Winkelposition der Greifmittel (20) des Ballens (11') auf solche Weise einzuhalten, dass der angehobene Ballen (11') rückwärts bewegt wird.

9. Vorrichtung nach Patentanspruch 7 oder 8, **dadurch gekennzeichnet, dass** die Mittel, welche die Mittel (28) zum Tragen der Greifmittel (20) für den Ballen (11') betätigen, wenigstens einen einfachwirkenden pneumatischen Hebezylinder (C3, C4) enthalten, dessen Ausfahrhub mit der Hebeposition der Greifmittel (20) des Ballens (11') übereinstimmt, und auch **dadurch gekennzeichnet, dass** Mittel vorgesehen sind, um das Antriebsfluid des pneumatischen Hebezylinders (C3, C4) allmählich auf solche Weise abzulassen, dass es dem Zylinder erlaubt ist, sich langsam nach unten zu bewegen, bis in der unteren Position alles Antriebsfluid abgelassen ist, in welcher dann ein anderer Ballen ausgenommen werden kann.

10. Vorrichtung nach einem beliebigen der vorstehenden Patentansprüche, **dadurch gekennzeichnet, dass** erste Fühlermittel (S1) vorgesehen sind, um den anzuhebenden Ballen (11') zu erfassen, wenn er beim Entladen eine bestimmte Position erreicht, so dass die Greifphase ausgelöst wird und somit der Ballen (11') angehoben werden kann.

11. Vorrichtung nach einem beliebigen der vorstehenden Patentansprüche, **dadurch gekennzeichnet, dass** zweite Fühlermittel (S2) vorgesehen sind, um den nachfolgenden Ballen (11") zu erfassen, wenn er während des Entladens eine bestimmte Position erreicht, so dass die Phase der Freigabe des angehobenen Ballen (11') ausgelöst wird, um diesen auf dem nachfolgenden Ballen (11'') zu platzieren, und auch **dadurch gekennzeichnet, dass** die bestimmte Position des nachfolgenden Ballens (11'') sich hinter der bestimmten Position des anzuhebenden Ballens (11') befindet, so dass, nachdem der Ballen (11') nach oben gedreht worden ist, er sich zu dem nachfolgenden Ballen (11") vertikal ausgerichtet befindet.

12. Vorrichtung nach Patentanspruch 10 oder 11, **dadurch gekennzeichnet, dass** wenigstens eins der ersten und zweiten Fühlermittel (S1, S2) einen Kontaktabschnitt (30a, 31 a) aufweist, der die vordere Fläche (11'a, 11"a) des entsprechenden Ballens (11', 11") berührt, wobei sich der genannte Kontaktabschnitt über der Entladerutsche (16) entlang der Austrittsbahn des entsprechenden Ballens (11', 11'') erstreckt; wobei Mittel (C1, 30, C2, 31) vorgesehen sind, um den Kontaktabschnitt (30a, 31a) der Fühlermittel (S1, S2) nach ausserhalb der Austrittsbahn des entsprechenden Ballens (11', 11") zu bringen.

13. Vorrichtung nach einem beliebigen der vorstehenden Patentansprüche von 10 bis 12, **dadurch gekennzeichnet, dass** wenigstens eins der ersten und zweiten Fühlermittel (S1, S2) an der Entladerutsche (16) montiert ist.

14. Vorrichtung nach Patentanspruch 12 oder 13, **dadurch gekennzeichnet, dass** die Mittel, welche den Kontaktabschnitt (30a, 31a) der Fühlermittel (S1, S2) nach ausserhalb der Austrittsbahn des entsprechenden Ballens (11', 11'') bringen, einen den Kontaktabschnitt (30a, 31 a) tragenden und drehbar an der Rutsche (16) montierten Arm (30, 31) enthalten, sowie Antriebsmittel (C1, C2) zum Drehen des Tragarms (30, 31) des Kontaktabschnittes (30a, 31a), und auch **dadurch gekennzeichnet, dass** der Tragarm (30, 31) einen Schaft (30', 31') enthält, der im wesentlichen lotrecht zu der Oberfläche der Rutsche (16) verläuft, auf welcher die Ballen gleiten, und von welchem aus sich eine Querstange (30", 31'') erstreckt, die im wesentlichen parallel zu der Oberfläche der Rutsche (16) verläuft, auf welcher die Ballen gleiten; wobei der lotrechte Schaft (30', 31') in einer Ebene gedreht wird, die ebenfalls im wesentlichen parallel zu der Oberfläche der Rutsche verläuft, und zwar auf solche Weise, dass eine Behinderung der zu entladenden Ballen (11', 11'') vermieden wird, auch beim Ausführen einer Kurve durch die Maschine (10).

15. Vorrichtung nach einem beliebigen der vorstehenden Patentansprüche, **dadurch gekennzeichnet, dass** dritte Fühlermittel (V2) vorgesehen sind, die das Anheben des Ballens durch die Hebemittel steuern, wobei die dritten Fühlermittel (V2) durch die Greifmittel des Ballens ausgelöst werden, wenn diese sich im Kontakt mit den Seiten des Ballens schliessen.

16. Vorrichtung nach einem beliebigen der vorstehenden Patentansprüche von 10 bis 15, **dadurch gekennzeichnet, dass** vierte Fühlermittel (V3) vorgesehen sind, um die ersten Fühlermittel (S1) nach ausserhalb der Bahn des sich bildenden Ballens (11') zu bewegen, wobei die vierten Fühlermittel (V3) durch die Greifmittel des Ballens ausgelöst werden, wenn diese sich im Kontakt mit den Seiten des Ballens schliessen.

17. Vorrichtung nach einem beliebigen der vorstehenden Patentansprüche von 11 bis 16, **dadurch gekennzeichnet, dass** fünfte Fühlermittel (V4) vorgesehen sind, um die Positionierung der zweiten Fühlermittel (S2) an der Bahn des sich bildenden Ballens (11") zu steuern, wobei die fünften Fühlermittel (V4) durch die Greifmittel des Ballens ausgelöst werden, wenn diese den Ballen (11') anheben.

18. Vorrichtung nach einem beliebigen der vorstehenden Patentansprüche von 11 bis 17, **dadurch gekennzeichnet, dass** sechste Fühlermittel (V6) vorgesehen sind, um die zweiten Fühlermittel (S2) nach ausserhalb der Bahn des sich bildenden Ballens (11") zu bewegen, wobei die sechsten Fühlermittel (V6) durch die Greifmittel des Ballens (11') ausgelöst werden, wenn diese sich öffnen, um den Ballen (11') freizugeben.

19. Vorrichtung nach einem beliebigen der vorstehenden Patentansprüche, **dadurch gekennzeichnet, dass** siebente Fühlermittel (V7) vorgesehen sind, um das Senken der Greifmittel des Ballens (11') durch die Hebemittel zu steuern, wobei die siebenten Fühlermittel (V7) durch die Greifmittel des Ballens (11') ausgelöst werden, wenn diese sich öffnen, um den Ballen (11') freizugeben.

20. Vorrichtung nach einem beliebigen der vorstehenden Patentansprüche von 10 bis 19, **dadurch gekennzeichnet, dass** achte Fühlermittel (V8) vorgesehen sind, um die Positionierung der ersten Fühlermittel (S1) an der Bahn des sich bildenden Ballens (11') zu steuern, wobei die achten Fühlermittel (V8) durch die Greifmittel des Ballens (11') ausgelöst werden, wenn diese sich nach unten bewegen.

21. Vorrichtung nach einem beliebigen der vorstehenden Patentansprüche, **dadurch gekennzeichnet, dass** Sicherheits-Fühlermittel (V9) vorgesehen sind, um Zustände a-nomaler Belastung der Greifmittel des Ballens anzuzeigen.

22. Maschine (10) zum Bilden von Heuballen (11', 11") oder ähnlichem, **dadurch gekennzeichnet, dass** sie eine Stapelvorrichtung der Ballen nach einem beliebigen der vorstehenden Patentansprüche enthält.

## Revendications

1. Un dispositif pour manipuler les balles dans une machine (10) de mise en balles (11', 11") de végétaux ou similaires, destinés de préférence à un usage zootechnique ; la machine comprenant une unité (12) de mise en balles (11', 11") des végétaux qui présente une extrémité (14) par laquelle les balles (11', 11") sortent en séquence, et une rampe de déchargement (16) située au niveau de l'extrémité (14) de sortie des balles (11', 11") de l'unité de mise en balles (12) et s'étendant à l'arrière de la machine (10) ; le dispositif de manipulation des balles comprenant des moyens (18) d'empilement des balles, destinés à prélever et à soulever une balle (11') sortie de l'unité de mise en balles et à placer cette même balle (11') sur la balle (11") suivante qui sort de l'unité de mise en balles ; le dispositif de manipulation des balles étant **caractérisé en ce que** lesdits moyens (18) d'empilement des balles sont associés au châssis de la machine par des moyens de support (28) comprenant des barres de support (34, 34) situées au niveau de l'extrémité de sortie (14) de l'unité (12) de mise en balles.

2. Le dispositif selon la revendication 1, **caractérisé en ce que** les moyens d'empilement (18) comprennent des moyens (20), situés au-dessus de la rampe de déchargement, destinés à saisir la balle (11') quand cette dernière est entièrement et opportunément positionnée sur la rampe (16), et des moyens (22) destinés à entraîner les moyens (20) de prise de la balle de manière à les déplacer entre une position basse de prise et une position haute qui permet, une fois que la balle (11") suivante a été placée au-dessous de la balle soulevée (11') et que les moyens de prise (20) ont été actionnés pour relâcher la balle soulevée (11'), de placer la balle soulevée (11') sur la balle (11") qui suit.

3. Le dispositif selon la revendication 2, **caractérisé en ce que**, lorsque la balle soulevée (11') est dans la position haute, son dessous se trouve à un niveau situé juste au-dessus de la hauteur de la balle (11") qui suit.

4. Le dispositif selon la revendication 2 ou 3, **caractérisé en ce que**, une fois que les balles empilées (11', 11") ont été déchargées par la rampe (16), les moyens d'entraînement (22) ramènent les moyens (20) de prise de la balle dans la position basse de prise.

5. Le dispositif selon l'une quelconque des revendications précédentes de 2 à 4, **caractérisé en ce que** les moyens (20) de prise de la balle comprennent au moins une première et une seconde mâchoires (21, 21'), transversalement espacées l'une de l'autre et destinées à saisir les côtés de la balle (11'), et des moyens (C5) destinés à actionner ces mêmes première et seconde mâchoires (21, 21') entre une position fermée, dans laquelle elles enserrent les côtés de la balle (11') lorsque cette même balle (11') est dans la position basse de prélèvement, et une position ouverte, dans laquelle les côtés de la balle (11') sont relâchés lorsque cette même balle (11') est dans la position haute afin d'être placée sur la balle (11") qui suit.

6. Le dispositif selon la revendication 5, **caractérisé en ce que** les moyens (20) de prise de la balle (11') comprennent un châssis (26) de support des mâchoires (21, 21') qui sont montées de façon pivotante sur ce même châssis (26) ; lesdites mâchoires (21, 21') ayant chacune une partie (21", 21"), située en dessous de l'axe de pivotement au châssis de support (26) et destinée à assujettir et à enserrer les côtés de la balle (11'), et une partie (21''', 21'''), située au-dessus de l'axe de pivotement, reliée aux moyens (C5) d'actionnement des moyens de prise (20) et actionnée par ces mêmes moyens (C5).

7. Le dispositif selon l'une quelconque des revendications précédentes de 2 à 6, **caractérisé en ce que** les moyens (22) d'entraînement des moyens (20) de prise de la balle comprennent des moyens (28) destinés à supporter les moyens (20) de prise de la balle (11') et des moyens (C3, C4) destinés à actionner les moyens (28) en question qui supportent les moyens (20) de prise de la balle (11').

8. Le dispositif selon la revendication 7, **caractérisé en ce que** les moyens de support (28) sont destinés à maintenir la position angulaire des moyens (20) de prise de la balle (11') de manière à déplacer la balle soulevée (11') en arrière.

9. Le dispositif selon la revendication 7 ou 8, **caractérisé en ce que** les moyens qui actionnent les moyens (28) de support des moyens (20) de prise de la balle (11') comprennent au moins un vérin pneumatique simple effet de soulèvement (C3, C4) dont la course de sortie coïncide avec la position soulevée des moyens (20) de prise de la balle (11'), et également **caractérisé en ce que** des moyens sont prévus pour laisser échapper petit à petit le fluide d'entraînement du vérin pneumatique de soulèvement (C3, C4) de manière à permettre au vérin lui-même de descendre lentement jusqu'à ce que tout le fluide d'entraînement se soit échappé au niveau de la position basse dans laquelle une autre balle peut être prélevée.

10. Le dispositif selon l'une quelconque des revendications précédentes, **caractérisé en ce que** des premiers moyens capteurs (S1) sont prévus pour détecter la balle (11') à soulever lorsque celle-ci atteint une position déterminée durant le déchargement afin d'activer la phase de prise et donc le soulèvement de cette même balle (11').

11. Le dispositif selon l'une quelconque des revendications précédentes, **caractérisé en ce que** des seconds moyens capteurs (S2) sont prévus pour détecter la balle (11") suivante lorsque celle-ci atteint une position déterminée durant le déchargement afin d'activer la phase de relâche de la balle soulevée (11') pour la placer sur la balle (11") qui suit, et également **caractérisé en ce que** la position déterminée de la balle (11") qui suit est en retrait par rapport à la position déterminée de la balle (11') à soulever de manière à ce que la balle (11'), après avoir été tournée vers le haut, soit alignée verticalement avec la balle (11") qui suit.

12. Le dispositif selon la revendication 10 ou 11, **caractérisé en ce qu'**au moins l'un des premiers et seconds moyens capteurs (S1, S2) a une portion de contact (30a, 31a) qui touche la face avant (11'a, 11"a) de la balle (11', 11") correspondante, ladite portion de contact s'étendant au-dessus de la rampe de déchargement (16) le long du parcours de sortie de la balle (11', 11") correspondante ; des moyens (C1, 30, C2, 31) étant prévus pour mettre la portion de contact (30a, 31a) des moyens capteurs (S1, S2) en dehors du parcours de sortie de la balle (11', 11") correspondante.

13. Le dispositif selon l'une quelconque des revendications précédentes de 10 à 12, **caractérisé en ce qu'**au moins l'un des premiers et seconds moyens capteurs (S1, S2) est monté sur la rampe de déchargement (16).

14. Le dispositif selon la revendication 12 ou 13, **caractérisé en ce que** les moyens destinés à mettre la portion de contact (30a, 31a) des moyens capteurs (S1, S2) en dehors du parcours de sortie de la balle (11', 11") correspondante comprennent un bras (30, 31) supportant la portion de contact (30a, 31a) et monté de façon pivotante sur la rampe (16), ainsi que des moyens d'entraînement (C1, C2) destinés à mettre en rotation le bras (30, 31) de support de la portion de contact (30a, 31a), et également **caractérisé en ce que** le bras de support (30, 31) comprend une tige (30', 31') qui est essentiellement perpendiculaire à la surface de la rampe (16) de glissement des balles, et à partir de laquelle s'étend une traverse (30", 31") qui est essentiellement parallèle à la surface de la rampe (16) de glissement des balles ; la tige perpendiculaire (30', 31') étant tournée dans un plan qui est, lui aussi, essentiellement parallèle à la surface de la rampe, de manière à éviter toute interférence avec les balles (11', 11") en cours de déchargement, même lorsque la machine (10) est en train de négocier un virage.

15. Le dispositif selon l'une quelconque des revendications précédentes, **caractérisé en ce que** des troisièmes moyens capteurs (V2) sont prévus pour commander le soulèvement de la balle par les moyens de soulèvement, les troisièmes moyens capteurs (V2) étant activés par les moyens de prise de la balle lorsque ceux-ci se ferment pour venir enserrer les côtés de la balle.

16. Le dispositif selon l'une quelconque des revendications précédentes de 10 à 15, **caractérisé en ce que** des quatrièmes moyens capteurs (V3) sont prévus pour déplacer les premiers moyens capteurs (S1) en dehors de la trajectoire de la balle (11') en formation, les quatrièmes moyens capteurs (V3) étant activés par les moyens de prise de la balle lorsque ceux-ci se ferment pour venir enserrer les côtés de la balle.

17. Le dispositif selon l'une quelconque des revendications précédentes de 11 à 16, **caractérisé en ce que** des cinquièmes moyens capteurs (V4) sont prévus pour commander le positionnement des seconds moyens capteurs (S2) sur la trajectoire de la balle (11') en formation, les cinquièmes moyens capteurs (V4) étant activés par les moyens de prise de la balle lorsque ceux-ci soulèvent la balle (11').

18. Le dispositif selon l'une quelconque des revendications précédentes de 11 à 17, **caractérisé en ce que** des sixièmes moyens capteurs (V6) sont prévus pour déplacer les seconds moyens capteurs (S2) en dehors de la trajectoire de la balle (11") en formation, les sixièmes moyens capteurs (V6) étant activés par les moyens de prise de la balle (11') lorsque ceux-ci s'ouvrent pour relâcher la balle (11').

19. Le dispositif selon l'une quelconque des revendications précédentes, **caractérisé en ce que** des septièmes moyens capteurs (V7) sont prévus pour commander l'abaissement des moyens de prise de la balle (11'), par les moyens de soulèvement, les septièmes moyens capteurs (V7) étant activés par les moyens de prise de la balle (11') lorsque ceux-ci s'ouvrent pour relâcher la balle (11').

20. Le dispositif selon l'une quelconque des revendications précédentes de 10 à 19, **caractérisé en ce que** des huitièmes moyens capteurs (V8) sont prévus pour commander le positionnement des premiers moyens capteurs (S1) sur la trajectoire de la balle (11') en formation, les huitièmes moyens capteurs (V8) étant activés par les moyens de prise de la balle (11') lorsque ceux-ci s'abaissent.

21. Le dispositif selon l'une quelconque des revendications précédentes, **caractérisé en ce que** des moyens capteurs de sécurité (V9) sont prévus pour signaler des conditions de sollicitation anormale des moyens de prise de la balle.

22. Une machine (10) de mise en balles (11', 11") de végétaux ou similaires, **caractérisée en ce qu'**elle comprend un dispositif d'empilement des balles réalisé selon l'une quelconque des revendications précédentes.
